# FASCICULE DE BREVET EUROPEEN

(11) **EP 1 381 525 B1**
(45) Date de publication et mention de la délivrance du brevet: **15.02.2006**
(21) Numéro de dépôt: 02732631.3
(22) Date de dépôt: 17.04.2002
(51) Int. Cl.: B60C 9/08, B60C 15/00, B60C 9/20

(54) **ARMATURES DE PNEUMATIQUE POUR AVION**
GÜRTEL FÜR FLUGZEUGREIFEN
TYRE ARMATURES FOR AN AIRPLANE

(30) Priorité: 19.04.2001 FR 0105337
(43) Date de publication de la demande: 21.01.2004
(73) Titulaire: Société de Technologie Michelin, 63000 Clermont-Ferrand Cedex 09 (FR); MICHELIN RECHERCHE ET TECHNIQUE S.A., 1763 Granges-Paccot (CH)
(72) Inventeur: ROGET, Cyrille, F-63122 Saint Genes Champanelle (FR); VIALATTE, Lilian, F-63000 Clermont-Ferrand (FR)
(74) Mandataire: Diernaz, Christian
(86) Numéro de dépôt international: PCT/EP2002/004255
(87) Numéro de publication internationale: WO 2002/085646

(56) Documents cités:
- EP-A- 0 335 588
- EP-A- 0 387 826
- EP-A- 0 976 584

## Description

La présente invention concerne un pneumatique à armature de carcasse radiale destiné à porter de lourdes charges et gonflé à des pressions relativement fortes, et en particulier un pneumatique pour avions.

Les armatures de carcasse radiales de tels pneumatiques comportent généralement plusieurs nappes d'éléments de renforcement textiles, qui sont ancrées dans chaque bourrelet à au moins un élément de renforcement annulaire et le plus souvent à une seule tringle. Les éléments de renforcement desdites armatures sont enroulés autour de ladite tringle de l'intérieur à l'extérieur en formant de retournements dont les extrémités respectives sont radialement espacées par rapport à l'axe de rotation du pneumatique. Les conditions sévères sous lesquelles sont utilisés les pneumatiques pour avions sont telles que l'endurance des bourrelets est faible, en particulier au niveau des retournements de l'armature de carcasse.

Une amélioration notable des performances est obtenue par la séparation des nappes de l'armature de carcasse en deux groupes. Le premier groupe comprend les nappes de l'armature de carcasse axialement intérieures dans la zone des flancs et bourrelets, lesdites nappes étant alors enroulées autour d'une tringle d'ancrage dans chaque bourrelet en allant de l'intérieur à l'extérieur du pneumatique. Le deuxième groupe est constitué d'au moins une nappe axialement extérieure dans la zone ci-dessus, nappe généralement partiellement enroulée autour de la tringle en allant de l'extérieur à l'intérieur du pneumatique. De telles dispositions sont connues et montrées par exemple dans le brevet US 4 244 414 (figure 2 dudit brevet).

L'endurance des bourrelets ainsi constitués peut être améliorée par la présence dans chaque bourrelet d'une nappe de renforcement supplémentaire enroulée autour de la tringle et formant ainsi un brin axialement extérieur et un brin axialement intérieur, ladite nappe de renforcement étant la nappe la plus proche du profilé caoutchouteux de remplissage ou bourrage, généralement triangulaire et radialement au-dessus de la tringle d'ancrage. Une telle architecture est montrée dans le brevet US 5 285 835.

De même il a été proposé une solution consistant à disposer le(les) bord(s) de la (des) dite(s) nappes axialement extérieures entre les retournements des nappes axialement intérieures.

L'endurance des bourrelets de pneumatiques pour avions se doit cependant d'être améliorée, en particulier lorsque lesdits bourrelets subissent de fortes surcharges pouvant leur conférer des écrasements de l'ordre de 50% et plus de leur hauteur. Le progrès à attendre d'une mise au point de l'architecture des bourrelets semble être, du moins actuellement, assez limitée, du fait même du nombre nécessaire de nappes de carcasse, généralement formées d'éléments de renforcement en polyamide aliphatique, pour supporter la tension due à la pression dite d'épreuve qui, comme connu, doit être égale à quatre fois la pression de service. Le nombre important desdites nappes de carcasse entraîne de manière évidente la multiplication des extrémités libres d'éléments de renforcement, la multiplication des interfaces entre nappes, des pertes hystérétiques plus importantes et donc des températures de fonctionnement plus élevées, autant de facteurs propices à une augmentation de la fatigue des bourrelets et à une limitation de leur endurance.

La solution proposée par la présente invention pour améliorer l'endurance des bourrelets d'un pneumatique d'avion réside dans le remplacement des nappes de carcasse en polyamide aliphatique par des nappes de carcasse formées d'éléments de renforcement composites, c'est-à-dire formés de filés de modules différents.

Conformément à l'invention, un pneumatique d'avion, gonflé à pression élevée, ayant une bande de roulement, une armature de sommet et une armature de carcasse radiale, cette armature de carcasse radiale comportant une pluralité d'éléments de renfort textiles orientés sensiblement radialement (c'est-à-dire faisant un angle compris entre 80° et 100° avec la direction circonférentielle), cette armature étant ancrée à au moins une armature de renforcement circonférentiel dans chaque bourrelet, ce pneumatique étant caractérisé en ce que les éléments de renforcement radiaux de l'armature de carcasse sont des câbles composites formés par retordage d'au moins un filé ayant un module d'élasticité en traction au moins égal à 2000 cN/tex, avec au moins un filé ayant un module d'élasticité à la traction au plus égal à 1500 cN/tex, lesdits modules d'élasticité desdits filés étant mesurés pour une force de traction égale à dix pour cent (10%) de la force de rupture de chaque filé considéré.

Préférentiellement, le pneumatique d'avion selon l'invention est tel que certains des éléments de renforcement sont ancrés autour d'un élément de renforcement circonférentiel (comme par exemple une tringle) en allant axialement de l'intérieur vers l'extérieur et les autres éléments de renforcement sont ancrés autour dudit élément de renforcement circonférentiel en allant de l'extérieur vers l'intérieur.

Une autre variante conforme à l'invention est un pneumatique d'avion, gonflé à pression élevée, avec une bande de roulement, une armature de sommet et une armature de carcasse radiale comprenant :
au moins deux nappes axialement intérieures formées d'éléments de renforcement textiles orientés radialement (c'est-à-dire faisant sur le pneumatique un angle compris entre 80° et 100° avec la direction circonférentielle), lesdites deux nappes étant enroulées autour d'au moins une tringle dans chaque bourrelet de l'intérieur à l'extérieur en formant des retournements et,
au moins une nappe axialement extérieure d'éléments textiles orientés radialement, superposée radialement aux nappes intérieures sous l'armature de sommet pour s'étendre le long des retournements desdites nappes intérieures dans les bourrelets,
et caractérisé en ce que les éléments de renforcement radiaux de toutes les nappes de l'armature de carcasse sont des câbles formés par retordage d'au moins un filé, ledit filé ayant un module d'élasticité en traction au moins égal à 2000 cN/tex, avec au moins un filé surtordu ou non, de module d'élasticité à la traction au plus égal à 1500 cN/tex, lesdits modules d'élasticité de chacun desdits filés étant mesurés pour une force de traction égale à dix pour cent (10%) de la force de rupture du filé correspondant.

Ainsi renforcées de câbles constitués de filés ayant des modules d'élasticité différents aux faibles déformations, les nappes de l'armature de carcasse sont, de manière surprenante, plus à mêmes de résister aux sollicitations de tension et aux sollicitations de fatigue (en compression notamment).

### Définitions :

- un filé ("yarn" en anglais) est constitué de un ou plusieurs filaments unitaires ;
- un filé pré-tordu ("folded yarn" en anglais) est un filé ayant subi une opération de torsion avant d'être assemblé par retordage avec au moins un autre filé pour former un cable ou un retors ("plied yarn" ; "cord" en anglais).

Il est entendu qu'avec des filaments identiques on peut former, grâce à des opérations de torsion appropriées, un filé pré-tordu haut module et un filé pré-tordu bas module, ces deux filés pré-tordus de modules différents ainsi obtenus étant ensuite assemblés par retordage pour former l'élément de renfort d'une ou plusieurs des nappes de l'armature de carcasse d'un pneumatique selon l'invention.

Les modules d'élasticité à la traction des filés résultent, comme connu en soi, des courbes représentant les forces de traction en fonction de l'allongement relatif obtenues sur les filés en tant que tels avant leur incorporation dans l'élément de renfort ; ces modules d'élasticité correspondent à des modules sécants au point de déformation correspondant à une force de traction égale à 10% de la force de rupture du filé considéré.

Les câbles composites ou câbles hybrides utilisés ci-dessus sont connus en eux-mêmes. Par exemple, le brevet US 3 977 172 enseigne leur utilisation pour renforcer un produit manufacturé. Le brevet US 4 893 665 revendique l'utilisation de câbles, formés d'au moins deux fils constitués de polyamide aromatique et d'une âme sous forme d'au moins un filament de polyamide aliphatique ou de polyester. Le même type de câble est plus particulièrement utilisé comme éléments de renforcement d'une armature de sommet de pneumatique pour avions. Le brevet EP 335 588 décrit l'utilisation particulièrement avantageuse de câbles composites comme éléments de renforcement circonférentiels d'une nappe de recouvrement d'une armature de sommet de travail à deux nappes de câbles métalliques croisés d'une nappe à la suivante. Toutefois, aucun de ces documents ne décrit ni ne suggère la combinaison des caractéristiques de l'objet de l'invention, en particulier l'utilisation comme renforts d'armature de carcasse des câbles composites tels que définis.

Il est avantageux, dans le cas d'un pneumatique pour avion, que les câbles composites utilisés dans le pneumatique selon l'invention soient formés d'au moins deux filés à haut module d'élasticité et d'un seul filé à bas module d'élasticité, lesdits câbles présentant le meilleur compromis entre les deux propriétés que sont l'allègement du pneumatique et la résistance desdits câbles à la fatigue. Les trois filés ci-dessus sont individuellement surtordus de manière appropriée et sont ensuite retordus ensemble pour former l'élément de renforcement. On obtient ainsi, comme connu en soi, des câbles présentant une courbe représentative de la force de traction en fonction de l'allongement relatif ε qui se compose substantiellement de deux parties de part et d'autre d'un point de transition T : une première partie où le module d'élasticité en traction est faible, une deuxième partie où ledit module est élevé.

Si l'on définit, comme connu, un point de transition T comme le point d'intersection entre la courbe force de traction en fonction d'allongement ε et une droite parallèle à l'axe des ordonnées de ladite courbe passant par le point d'intersection des tangentes à ladite courbe respectivement à l'origine (correspondant au point de déformation nulle ε₀) et à la rupture (déformation à la rupture ε_{R}), la première partie se définit entre l'origine et la déformation ε_{T} et la deuxième partie entre la déformation ε_{T} et la déformation à la rupture ε_{R}. Afin que soit conférée au profil de l'armature de carcasse une stabilité dimensionnelle certaine, que ce soit circonférentiellement et/ou méridiennement, il est important que l'allongement relatif ε_{T} au point de transition T soit compris entre 1% et 7%.

Le rapport de la pente de la tangente à la courbe force de traction -allongement relatif au point d'allongement relatif nul sur la pente de la tangente à la courbe force de traction -allongement relatif au point d'allongement relatif à la rupture est avantageusement compris entre 0,08 et 1,0, alors que la force de rupture d'un élément de renforcement est préférentiellement supérieure à 70 cN/tex.

Les nappes de câbles composites ou câbles hybrides, décrites ci-dessus sont obtenues par enrobage de ces câbles dans un mélange caoutchouteux dit mélange de calandrage, le nombre de câbles par centimètre de nappe, mesuré perpendiculairement à la direction desdits câbles étant calculé pour obtenir la résistance à la tension nécessaire. Afin d'accroître encore la durée de vie des bourrelets du pneumatique concerné, le(s) mélange(s) de calandrage des nappes de carcasse axialement intérieures, enroulées autour de la tringle d'ancrage pour former des retournements, ont des modules sécants d'extension de valeur inférieure au(x) module(s) sécants d'extension des mélanges de calandrage de la(des) nappe(s) axialement extérieure(s). Lesdits modules sont des modules d'extension mesurés à 10% d'allongement relatif et conformément à la norme ASTM D 412). Le module du mélange unique de calandrage des nappes axialement intérieures est avantageusement compris entre 4,5 et 6,0 MPa, alors que le module du mélange unique des nappes axialement extérieures est compris entre 10,0 et 14,0 MPa.

L'armature de sommet pour pneumatique pour avion est, comme connu en soi, composée d'une armature de travail généralement formée d'éléments de renforcement textiles, et d'une armature de protection formée d'au moins une nappe d'éléments métalliques ou d'éléments en polyamide aromatique. L'armature de travail est généralement composée en allant radialement de l'intérieur à l'extérieur par au moins une nappe d'éléments de renforcement circonférentiels (est dit circonférentiel, dans le présent document, un élément de renforcement faisant avec la direction circonférentielle un angle compris entre -8° et + 8°), et par au moins un binappe de deux couches d'éléments croisés obtenues par enroulement en zigzag autour d'un support plus ou moins cylindrique et en allant d'un bord à l'autre de ladite armature, d'une bande d'au moins un élément de renforcement jusqu'à formation d'au moins desdites deux couches d'éléments faisant avec la direction circonférentielle des angles de directions opposées compris entre 8° et 30°.

Les éléments de renforcement de l'armature de sommet de travail sont avantageusement des câbles composites de même nature et de même structure que les câbles formant l'armature de carcasse. Il s'ensuit un nombre de couches réduit pour obtenir la même résistance à la tension, ledit nombre plus faible conduisant à de multiples avantages que sont la diminution de poids, la facilité de fabrication accrue, un coût de mise en oeuvre moindre, un sommet global moins épais avec pour conséquences des températures de fonctionnement plus basses, mais aussi des temps de cuisson plus courts tout en ayant une répartition plus régulière des températures de cuisson dans le pneumatique non encore vulcanisé.

Par ailleurs, l'utilisation de câbles composites pour l'armature de travail permet, comparée à l'utilisation de câbles en Nylon, d'avoir un mélange de bande de roulement moins sujet aux contraintes de tension, et en conséquence une meilleure résistance à l'attaque de l'ozone en fonds de creux (moins de craquelures), une meilleure résistance à la propagation desdites craquelures ou entailles initiées par des objets étrangers au pneumatique, une meilleure performance en usure, une meilleure résistance à la formation d'écailles sur la bande de roulement, ainsi qu'une meilleure résistance aux perforations de ladite bande de roulement dues aussi à des objets étrangers.

Les avantages ci-dessus seront d'autant plus prononcés que le module de calandrage desdites couches d'armature de sommet de travail aura une valeur intermédiaire entre les valeurs correspondantes de modules pour mélanges de calandrage respectivement des nappes de carcasse axialement extérieures et intérieures. Ledit module, de même définition et mesuré dans les mêmes conditions que les modules ci-dessus précisés, est avantageusement compris entre 7,5 et 9,5 MPa.

Les caractéristiques et autres avantages de l'invention seront mieux compris à l'aide de la description d'un exemple non limitatif, à laquelle est annexé un dessin sur lequel :

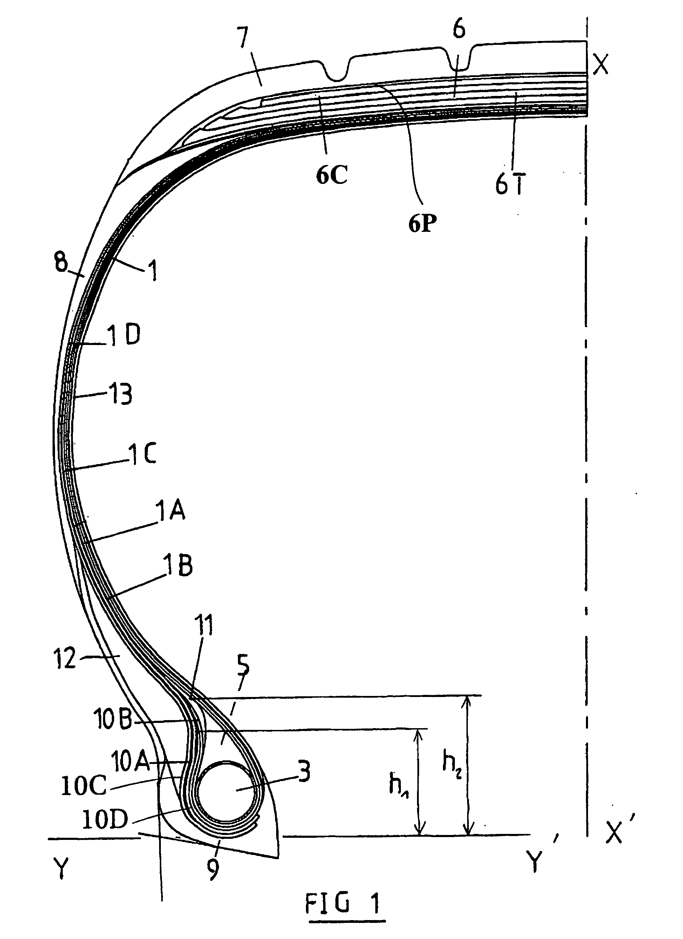

- la figure 1 montre schématiquement, vu en section méridienne, un pneumatique conforme à l'invention ;
- la figure 2 montre un exemple de courbe force allongement d'un élément de renfort de l'armature de carcasse du pneumatique de la figure 1 ;
- la figure 3 montre la sculpture d'une bande de roulement pour pneumatique conforme à l'invention.

L'exemple donné est celui d'un pneumatique de dimension normalisée 1400 x 530 R 23 (selon la norme 'Tire and Rim Association'). L'armature de carcasse 1 est formée de quatre nappes 1A à 1D de câbles textiles radiaux. Il faut entendre par câbles radiaux d'un pneumatique d'avion des câbles faisant avec la direction circonférentielle des angles pouvant être compris dans l'intervalle 90° ± 15°. Parmi lesdites quatre nappes, deux nappes 1A et 1B, axialement intérieures dans les flancs et bourrelets, sont enroulées dans chaque bourrelet 2 autour d'une tringle 3, ayant dans le cas étudié une section transversale circulaire, en allant de l'intérieur à l'extérieur du pneumatique P, pour former des retournements 10A et 10B. Il est en outre prévu une languette de protection (formée de renforts textiles en polyamide aliphatique) enroulée autour de la tringle et séparant ladite tringle de l'armature de carcasse.

Les extrémités desdits retournements sont distants de la base du bourrelet, représentée par une ligne YY' parallèle à l'axe de rotation du pneumatique et passant par le point d'intersection de la paroi verticale du bourrelet et de la génératrice tronconique de son siège, des hauteurs respectives h₁ et h₂. La hauteur h₁, la plus petite, est la hauteur du retournement 10A de la première nappe 1A axialement intérieure, alors que la hauteur h₂, la plus grande, est la hauteur du retournement 10B de la deuxième nappe 1B axialement intérieure. Les deux hauteurs h₁ et h₂ sont respectivement égales à 20% et 15% de la hauteur H du pneumatique sur jante, égale à 394 mm.

Par définition, la hauteur du pneumatique monté et gonflé, est, vue en section méridienne, la distance radiale mesurée entre le point de la bande de roulement le plus éloigné de l'axe de rotation et une parallèle audit axe distante dudit axe d'une quantité égale au rayon nominal normalisé de la jante de service. Un profilé de caoutchouc de forme sensiblement triangulaire 5 est disposé axialement entre les retournements 10A et 10B et les parties principales de nappes de carcasse intérieures et radialement au-dessus de la tringle.

Les nappes 1C et 1D d'armature de carcasse axialement extérieures ont leurs bords 10C et 10D qui recouvrent axialement à l'extérieur et de manière adjacente les retournements 10A et 10B des nappes 1A et 1B d'armature de carcasse 1. Lesdites nappes 1C et 1D sont enroulées autour de la tringle d'ancrage 3 sur une portion ou arc circulaire correspondant à un angle au centre de cercle circonscrit à la tringle au plus égal à 180°, de sorte que les extrémités desdites nappes 1C et 1D soient radialement situées au-dessous de la droite parallèle à l'axe de rotation passant par le centre de gravité de la section de tringle 3.

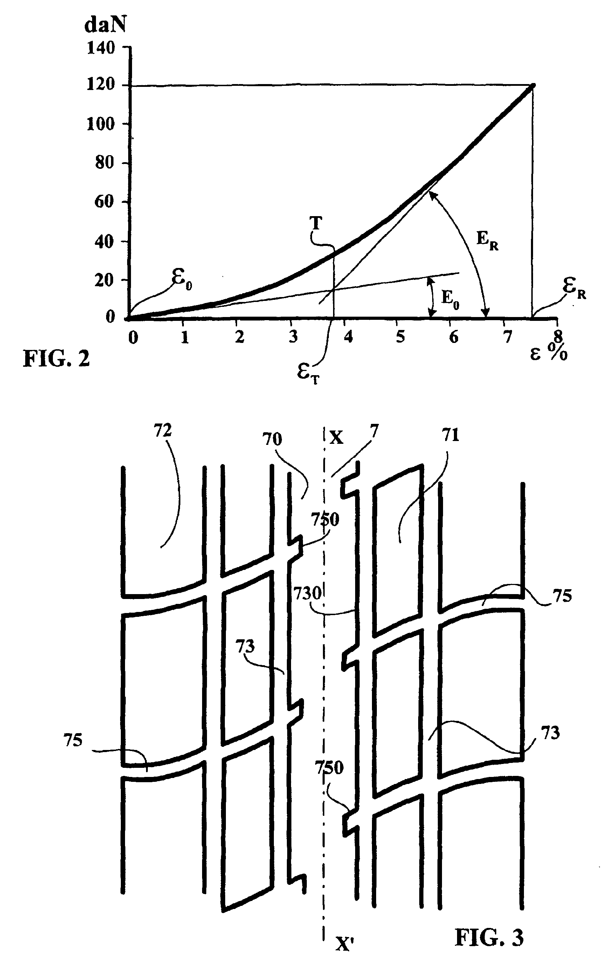

Les nappes 1A à 1D d'armature de carcasse du pneumatique d'avion considéré sont formées de câbles composites constitués de deux filés en polyamide aromatique, chaque filé ayant un titre de 330 tex, individuellement surtordu d'une torsion en S de 230 tours/mètre, et d'un filé en polyamide aliphatique (plus précisément en Nylon) dont le titre est égal à 188 tex, ledit filé étant individuellement surtordu d'une torsion en S de 230 tours/mètre. Les trois filés ainsi préalablement tordus sur eux-mêmes sont ensuite retordus ensemble avec une torsion en Z de 230 tours/mètre pour former le câble prêt à l'usage en nappes. À la figure 2, on voit la courbe de traction en fonction de l'allongement relatif (ou déformation) d'un câble ainsi constitué de ces trois filés ; cette courbe présente un point de transition T pour un allongement relatif ε_{T} égal à 3,8%, et le rapport Eo/E_{R} de la pente Eo de la tangente à ladite courbe à l'origine (ε₀ nul) à la pente E_{R} de la tangente à ladite courbe à la rupture est de 0,175. Dans le cas présent, le câble employé a une force de rupture sensiblement égale à 120 daN pour une déformation de 7.5%.

Dans le cas présenté, les nappes 1A à 1D utilisent le même câble sans que cela ne soit une nécessité de l'invention. Toutefois, la densité est différente selon les nappes : elle est plus importante pour les nappes axialement internes 83 câbles/décimètre contre 75 câbles/décimètre pour les nappes axialement externes.

Le mélange caoutchouteux, qui enrobe les câbles composites des nappes 1A et 1B d'armature de carcasse, est à base de caoutchouc naturel et a, à l'état vulcanisé, un module sécant d'extension, à 10% d'allongement relatif, égal à 5,4 MPa, ledit module étant mesuré dans les conditions préconisées par la norme citée au-dessus. Le mélange caoutchouteux qui enrobe les câbles composites des nappes 1C et 1D d'armature de carcasse, toujours à base de caoutchouc naturel, a un module sécant d'extension et mesuré dans les mêmes conditions, égal à 12,0 MPa. Les couches de mélange caoutchouteux de faible épaisseur qui sont éventuellement disposées entre nappes de carcasse et/ou qui bordent les extrémités de nappes suivent la même loi des modules : toute couche afférente aux nappes 1A et 1B a un module inférieur au module de toute couche afférente aux nappes 1C et 1D.

L'armature de carcasse radiale 1 est surmontée radialement d'une armature de sommet 6 comprenant d'une part une armature de travail 6T et radialement à l'extérieur une armature de protection 6P. L'armature de travail 6T est obtenue par enroulement, en zigzag sur une forme plus ou moins cylindrique et en allant d'un bord à l'autre de ladite armature, d'une bande de 8 câbles composites de même nature et même structure que les câbles utilisés pour les nappes de carcasse (la densité de l'armature de travail 6T est de 73 fils par décimètre). L'enroulement se réalise d'abord avec un angle de 5° et se prolonge jusqu'à obtenir une couche complète de câbles à 5°, puis l'angle de pose est modifié pour prendre la valeur de 9°, l'enroulement continuant jusqu'à obtention du nombre de couches croisées nécessaires, c'est-à-dire six pour la dimension concernée.

Le mélange caoutchouteux d'enrobage des câbles de la bande utilisée est à base de caoutchouc naturel et a un module sécant d'extension, mesuré dans les mêmes conditions que les modules précédents, égal à 8,5 MPa. L'armature de sommet de protection 6P se compose d'au moins une nappe formée d'éléments en polyamide aromatique 330/2 retordus à 450 tours/m, les éléments faisant avec la direction circonférentielle un angle compris entre 45 et 70° et plus précisément dans le cas décrit égal à 60°. Cette armature de sommet de protection 6P est découplée de l'armature de travail 6T par une couche de mélange de caoutchouc 6C facilitant l'opération de rénovation de la bande de roulement. L'armature de protection peut également être formée d'une nappe d'éléments de renforcement métalliques, ondulés dans le plan de la nappe, conformément à l'enseignement du brevet US 4 402 356, avec une orientation de l'axe moyen d'ondulation de 90° ± 5° ou 0° ± 5° par rapport à la direction circonférentielle.

Une bande de roulement 7, des flancs 8, des couches extérieures de protection des bourrelets 9, des profilés de remplissage de bourrelets 11, 12, ainsi qu'une couche caoutchouteuse intérieure 13 complètent, comme connu, la constitution du pneumatique étudié.

L'architecture décrite ci-dessus, avec une armature de carcasse 1 et une armature de sommet de travail 6T composée d'éléments de renforcement composites, du fait même de la stabilité dimensionnelle du pneumatique obtenue, permet l'utilisation avantageuse d'une sculpture comportant des blocs comme montré avec la figure 3. Une bande de roulement 7 comprend cinq nervures, une nervure centrale 70, puis deux nervures intermédiaires 71, les bords de bande de roulement 7 étant deux nervures latérales 72, et lesdites nervures étant axialement séparées par des rainures circonférentielles 73. Les nervures intermédiaires 71 et les nervures latérales 72 sont circonférentiellement divisées en blocs par des rainures d'orientation générale transversale 75 dont les extrémités axialement intérieures 750 sont légèrement plus proches du plan équatorial XX' du pneumatique que ne le sont les parois axialement intérieures 730 des rainures longitudinales 73 les plus proches dudit plan, et la nervure centrale 70 étant exempte de rainures 75 la traversant.

Lesdites rainures transversales 75 sont légèrement courbes avec une orientation moyenne (mesurée par l'angle que fait la droite joignant les deux extrémités avec la direction circonférentielle) comprise entre° 45°et 70°, c'est-à-dire la même orientation que la nappe de protection 6P radialement sous-jacente. Elles sont disposées de part et d'autre du plan équatorial XX' de manière à former un dessin de sculpture non directionnel, c'est-à-dire utilisable sans précision d'un sens de roulage. Une combinaison d'architecture des nappes de renforcement selon l'invention avec la sculpture telle que décrite, d'une part permet une meilleure adhérence sur des sols rendus glissants par la poussière humidifiée, et d'autre part permet une meilleure résistance lors de roulages sous très faible pression (pression inférieure au tiers de la pression de service) et à grande vitesse.

Par ailleurs, un pneumatique tel que décrit ci-dessus a été testé avec succès suivant la norme TSO C62D. Comparativement à un pneumatique de même dimension et comportant une armature de carcasse composée de huit nappes en polyamide aliphatique, l'allègement du pneumatique est de 15%, le temps de fabrication est réduit de 20%.

En outre, il a été noté que l'emploi d'éléments de renforcement composites comme éléments de renfort de l'armature de sommet, du fait même de la grande stabilité dimensionnelle du pneumatique obtenue dans sa partie sommitale grâce auxdits éléments de renforcement, autorise l'utilisation de la même sculpture pourvue de blocs (figure 3). De façon surprenante, on constate que cet avantage est conservé indépendamment du fait que l'armature de carcasse comprend ou non des éléments de renforcement du même type. Les problèmes que l'on peut constater avec des armatures de sommet classiques en pneumatique avion, notamment de fatigue en fond de rainures, sont ici résolus.

## Revendications

1. Pneumatique d'avion, gonflé à pression élevée, ayant une bande de roulement (7), une armature de sommet (6) et une armature de carcasse radiale (1), cette armature de carcasse radiale (1) comportant une pluralité d'éléments de renfort textiles orientés sensiblement radialement (c'est-à-dire faisant un angle compris entre 80° et 100° avec la direction circonférentielle), cette armature étant ancrée à au moins une armature de renforcement circonférentiel (3) dans chaque bourrelet (2), ce pneumatique étant **caractérisé en ce qu'**il comprend comme éléments de renforcement radiaux de l'armature de carcasse (1) des câbles composites dont la courbe représentative de la force de traction en fonction de l'allongement relatif se compose substantiellement de deux parties de part et d'autre d'un point de transition T, ce point T correspondant à un allongement relatif compris entre 1% et 7%, le rapport de la pente de la tangente au point d'allongement relatif nul sur la pente de la tangente à la courbe force allongement à la rupture étant compris entre 0.08 et 1.0, et **en ce que** la force de rupture d'un élément de renforcement de l'armature de carcasse est supérieure à 70cN/tx, de manière à conférer une stabilité dimensionnelle au pneumatique.

2. Pneumatique selon la revendication 1 **caractérisé en ce que** les éléments de renforcement radiaux de l'armature de carcasse (1) sont des câbles composites formés par retordage d'au moins un filé ayant un module d'élasticité en traction au moins égal à 2000 cN/tex, avec au moins un filé ayant un module d'élasticité à la traction au plus égal à 1500 cN/tex, lesdits modules d'élasticité desdits filés étant mesurés pour une force de traction égale à dix pour cent (10%) de la force de rupture de chaque filé considéré.

3. Pneumatique d'avion selon l'une des revendications 1 ou 2 **caractérisé en ce que** certains des éléments de renforcement sont ancrés autour de l'armature de renforcement circonférentiel (3) en allant de l'intérieur vers l'extérieur et les autres éléments de renforcement sont ancrés autour de la même armature de renforcement circonférentiel (3) en allant de l'extérieur vers l'intérieur.

4. Pneumatique d'avion, gonflé à pression élevée, avec une bande de roulement (7), une armature de sommet (6) et une armature de carcasse radiale (1) comprenant :
- au moins deux nappes (1A et 1B) axialement intérieures formées d'éléments de renforcement textiles orientés radialement (angle des renforts entre 80° et 100° avec la direction circonférentielle), lesdites deux nappes étant enroulées autour d'au moins une tringle (3) dans chaque bourrelet (2) de l'intérieur à l'extérieur en formant des retournements (10A et 10B) et,
- au moins une nappe (1C, 1D) axialement extérieure d'éléments de renforcement textiles orientés radialement, superposée radialement aux nappes intérieures (1A et 1B) sous l'armature de sommet (6) pour s'étendre le long des retournements (10A et 10B) desdites nappes intérieures dans les bourrelets (2),
et étant **caractérisé en ce que** les éléments de renforcement radiaux de toutes les nappes (1A, 1B, 1C, 1D, ..) de l'armature de carcasse (1) sont des câbles composites formés par retordage d'au moins un filé ayant un module d'élasticité en traction au moins égal à 2000 cN/tex, avec au moins un filé surtordu ou non, de module d'élasticité à la traction au plus égal à 1500 cN/tex, lesdits modules d'élasticité desdits filés étant mesurés pour une force de traction égale à 0,1 fois la force de rupture de chaque filé considéré.

5. Pneumatique selon la revendication 4, **caractérisé en ce que** la courbe représentative de la force de traction en fonction de l'allongement relatif de chaque élément de renfort d'armature de carcasse présente une pente à l'origine (déformation nulle) et une pente à la rupture (déformation εR), le rapport de la pente de la tangente à la courbe au point d'allongement relatif ε0 nul, à la pente de la tangente à la même courbe au point d'allongement εR à la rupture étant compris entre 0,08 et 1,0.

6. Pneumatique selon la revendication 5, **caractérisé en ce que** l'allongement relatif εT en un point de transition T, défini comme étant le point d'intersection entre la courbe représentative de la force de traction en fonction de l'allongement ε et une droite parallèle à l'axe des ordonnées de ladite courbe passant par le point d'intersection des tangentes à ladite courbe respectivement aux points correspondant à l'allongement relatif nul ε0 et à l'allongement relatif à la rupture εR, est compris entre 1% et 7%.

7. Pneumatique selon la revendication 6, **caractérisé en ce que** la force de rupture d'un élément de renforcement est supérieure à 70 cN/tex.

8. Pneumatique selon la revendication 7, **caractérisé en ce que** le filé à module élevé est un filé de filaments en polyamide aromatique et **en ce que** le filé à module faible est un filé de filaments en polyamide aliphatique.

9. Pneumatique selon l'une des revendications 4 à 8, **caractérisé en ce que** le(s) mélange(s) caoutchouteux de calandrage des nappes de carcasse (1A, 1B) axialement intérieures, enroulées autour de la tringle d'ancrage (3) pour former des retournements (10A, 10B), ont des modules sécants d'extension de valeur inférieure aux module(s) sécants d'extension des mélanges de calandrage de la(des) nappe(s) (1C, 1 D) axialement extérieure(s).

10. Pneumatique selon la revendication 9, **caractérisé en ce que** le module du mélange unique de calandrage des nappes axialement intérieures (1A, 1B) est compris entre 4,5 et 6,0 MPa, alors que le module du mélange unique des nappes (1C, 1D) axialement extérieures est compris entre 10,0 et 14,0 MPa.

11. Pneumatique selon l'une des revendications 4 à 10, **caractérisé en ce que** l'armature de sommet (6) comprend au moins une armature de travail (6T), obtenue par enroulement en zigzag, autour d'une forme plus ou moins cylindrique et en allant d'un bord à l'autre de ladite armature, d'une bande d'au moins un élément de renforcement jusqu'à formation d'au moins deux couches d'éléments croisés faisant avec la direction circonférentielle un angle compris entre 8° et 30°, ledit élément de renforcement étant un câble composite de même nature et de même structure que les câbles formant l'armature de carcasse (1).

12. Pneumatique selon la revendication 11, **caractérisé en ce que** l'armature de sommet de travail (6T) comprend au moins, radialement entre l'armature de carcasse (1) et les couches obtenues par enroulement en zigzag, une nappe formée d'éléments circonférentiels de même nature et de même structure que les câbles formant l'armature de carcasse (1).

13. Pneumatique selon la revendication 11, **caractérisé en ce que** le module sécant d'extension du mélange de calandrage desdites couches d'armature de sommet (6T) de travail a une valeur intermédiaire entre les valeurs correspondantes de modules sécants d'extension pour mélanges de calandrage respectivement des nappes de carcasse axialement extérieures (1C, 1D) et intérieures (1A, 1B), ledit module étant compris entre 7,5 et 9,5 MPa.

14. Pneumatique selon l'une des revendications 11 à 13, **caractérisé en ce que** l'armature de sommet (6) comprend, radialement au-dessus de l'armature de travail (6T) une armature de protection (6P) composée d'au moins une nappe d'éléments de renforcement en polyamide aromatique faisant avec la direction circonférentielle un angle compris entre 45 et 70°.

15. Pneumatique selon la revendication 1 **caractérisé en ce que** les câbles d'armature de sommet de travail sont des câbles composites dont la courbe représentative de la force de traction en fonction de l'allongement relatif se compose substantiellement de deux parties de part et d'autre d'un point de transistion T, ce point T correspondant à un allongement relatif compris entre 1% et 7%, le rapport de la pente de la tangente au point d'allongement relatif nul sur la pente de la tangente à la courbe force allongement à la rupture étant compris entre 0.08 et 1.0, et **en ce que** la force de rupture d'un élément de renforcement de carcasse est supérieure à 70cN/tx.

16. Pneumatique selon la revendication 15 **caractérisé en ce que** la carcasse est formée d'éléments de renforcement identiques à ceux de l'armature de sommet de travail.

17. Pneumatique selon l'une des revendications 1 à 16, **caractérisé en ce que** la bande de roulement présente une sculpture comprenant une nervure centrale séparée axialement d'autres nervures par des rainures circonférentielles, la nervure centrale étant circonférentiellement continue alors que les autres nervures sont divisées en blocs par des rainures d'orientation générale transversale.

## Claims

1. An aircraft tyre, inflated to high pressure, having a tread (7), a crown reinforcement (6) and a radial carcass reinforcement (1), this radial carcass reinforcement (1) comprising a plurality of textile reinforcement elements oriented substantially radially (that is to say, forming an angle of between 80° and 100° with the circumferential direction), this reinforcement being anchored to at least one circumferential reinforcement armature (3) within each bead (2), this tyre being **characterised in that** it comprises as radial reinforcement elements of the carcass reinforcement (1) composite cables the curve representing the tensile force as a function of the relative elongation of which is composed substantially of two parts on either side of a transition point T, this point T corresponding to a relative elongation of between 1% and 7%, the ratio of the gradient of the tangent at the point of zero relative elongation on the gradient of the tangent to the force-elongation at break curve being between 0.08 and 1.0, and **in that** the breaking load of a reinforcement element of the carcass reinforcement is greater than 70 cN/tex, so as to impart dimensional stability to the tyre.

2. A tyre according to Claim 1, **characterised in that** the radial reinforcement elements of the carcass reinforcement (1) are composite cables formed by plying at least one yarn having a modulus of elasticity in tension at least equal to 2000 cN/tex with at least one yarn having a modulus of elasticity in tension at most equal to 1500 cN/tex, said elasticity moduli of said yarns being measured for a tensile force equal to ten percent (10%) of the breaking load of each yarn in question.

3. An aircraft tyre according to one of Claims 1 or 2, **characterised in that** some of the reinforcement elements are anchored around the circumferential reinforcement armature (3) from the inside towards the outside and the other reinforcement elements are anchored around the same circumferential reinforcement armature (3) from the outside towards the inside.

4. An aircraft tyre, inflated to high pressure, with a tread (7), a crown reinforcement (6) and a radial carcass reinforcement (1), comprising:
- at least two axially inner plies (1A and 1B) formed of textile reinforcement elements oriented radially (angle of the reinforcing threads between 80° and 100° with the circumferential direction), said two plies being wound around at least one bead wire (3) within each bead (2) from the inside to the outside, forming upturns (10A and 10B), and
- at least one axially outer ply (1C, 1D) of textile reinforcement elements oriented radially, superposed radially on the inner plies (1A and 1B) beneath the crown reinforcement (6) to extend along the upturns (10A and 10B) of said inner plies in the beads (2),
and being **characterised in that** the radial reinforcement elements of all the plies (1A, 1B, 1C, 1D, ..) of the carcass reinforcement (1) are composite cables formed by plying at least one yarn having a modulus of elasticity in tension at least equal to 2000 cN/tex, with at least one yarn, whether overtwisted or not, of modulus of elasticity in tension at most equal to 1500 cN/tex, said moduli of elasticity of said yarns being measured for a tensile force equal to 0.1 times the breaking load of each yarn in question.

5. A tyre according to Claim 4, **characterised in that** the curve representing the tensile force as a function of the relative elongation of each reinforcement element of the carcass reinforcement has a gradient at the origin (zero deformation) and a gradient at break (deformation εR), the ratio of the gradient of the tangent to the curve at the point of zero relative elongation ε0, to the gradient of the tangent to the same curve at the point of elongation at break εR being between 0.08 and 1.0.

6. A tyre according to Claim 5, **characterised in that** the relative elongation εT at a transition point T, defined as being the point of intersection between the curve representing the tensile force as a function of the elongation s and a straight line parallel to the y-axis of said curve passing through the point of intersection of the tangents to said curve respectively at the points corresponding to the zero relative elongation ε0 and to the relative elongation at break εR, is of between 1% and 7%.

7. A tyre according to Claim 6, **characterised in that** the breaking load of a reinforcement element is greater than 70 cN/tex.

8. A tyre according to Claim 7, **characterised in that** the yarn of high modulus is a yarn of filaments of aromatic polyamide and **in that** the yarn of low modulus is a yarn of filaments of aliphatic polyamide.

9. A tyre according to one of Claims 4 to 8, **characterised in that** the calendering rubber mix(es) of the axially inner carcass plies (1A, 1B), wound around the anchoring bead wire (3) to form upturns (10A, 10B), have secant moduli of extension of a value less than the secant modulus (moduli) of extension of the calendering mixes of the axially outer ply (plies) (1C, 1D).

10. A tyre according to Claim 9, **characterised in that** the modulus of the single calendering mix of the axially inner plies (1A, 1B) is between 4.5 and 6.0 MPa, whereas the modulus of the single mix of the axially outer plies (1C, 1D) is between 10.0 and 14.0 MPa.

11. A tyre according to one of Claims 4 to 10, **characterised in that** the crown reinforcement (6) comprises at least one working reinforcement (6T), obtained by winding in a zigzag, around a more or less cylindrical form and from one edge of said reinforcement to the other, a strip of at least one reinforcement element until at least two layers of crossed elements forming an angle of between 8° and 30° with the circumferential direction are formed, said reinforcement element being a composite cable of the same nature and of the same structure as the cables forming the carcass reinforcement (1).

12. A tyre according to Claim 11, **characterised in that** the working crown reinforcement (6T) comprises at least, radially between the carcass reinforcement (1) and the layers obtained by winding in a zigzag, a ply formed of circumferential elements of the same nature and of the same structure as the cables forming the carcass reinforcement (1).

13. A tyre according to Claim 11, **characterised in that** the secant modulus of extension of the calendering mix of said layers of working crown reinforcement (6T) has an intermediate value between the corresponding values of secant moduli of extension for calendering mixes respectively of the axially outer (1C, 1D) and inner (1A, 1B) carcass plies, said modulus being between 7.5 and 9.5 MPa.

14. A tyre according to one of Claims 11 to 13, **characterised in that** the crown reinforcement (6) comprises, radially above the working reinforcement (6T), a protective reinforcement (6P) composed of at least one ply of reinforcement elements of aromatic polyamide forming an angle of between 45 and 70° with the circumferential direction.

15. A tyre according to Claim 1, **characterised in that** the cables of the working crown reinforcement are composite cables the curve representing the tensile force as a function of the relative elongation of which is composed substantially of two parts on either side of a transition point T, this point T corresponding to a relative elongation of between 1% and 7%, the ratio of the gradient of the tangent to the point of zero relative elongation to the gradient of the tangent to the force/elongation at break curve being between 0.08 and 1.0, and **in that** the breaking load of a carcass reinforcement element is greater than 70 cN/tex.

16. A tyre according to Claim 15, **characterised in that** the carcass is formed of reinforcement elements identical to those of the working crown reinforcement.

17. A tyre according to one of Claims 1 to 16, **characterised in that** the tread has a tread pattern comprising a central rib separated axially from other ribs by circumferential grooves, the central rib being circumferentially continuous whereas the other ribs are divided into blocks by grooves of transverse general orientation.

## Patentansprüche

1. Luftreifen für Flugzeuge, der auf einen hohen Druck aufgepumpt ist, mit einem Laufstreifen (7), einer Scheitelbewehrung (6) und einer radialen Karkassenbewehrung (1), wobei die radiale Karkassenbewehrung (1) eine Vielzahl von textilen Verstärkungselementen aufweist, die in etwa radial orientiert sind (d. h. mit der Umfangsrichtung einen Winkel von 80° bis 100° bilden), wobei diese Bewehrung in jedem Wulst (2) an mindestens einer umlaufenden Verstärkungsbewehrung (3) verankert ist, wobei der Luftreifen **dadurch gekennzeichnet ist, dass** er als radiale Verstärkungselemente der Karkassenbewehrung (1) gemischte kombinierte Seile aufweist, deren Kurve, die die Zugkraft in Abhängigkeit von der relativen Dehnung darstellt, im Wesentlichen aus zwei Bereichen auf beiden Seiten eines Übergangspunktes T zusammengesetzt ist, wobei der Übergangspunkt T einer relativen Dehnung von 1 bis 7 % entspricht, wobei das Verhältnis der Steigung der Tangente am Punkt der relativen Dehnung Null und der Steigung der Tangente an die Kraftdehnungskurve beim Bruch im Bereich von 0,08 bis 1,0 liegt, und **dadurch**, dass die Reißkraft eines Verstärkungselements der Karkassenbewehrung über 70 cN/tex liegt, damit der Luftreifen formbeständiger wird.

2. Luftreifen nach Anspruch 1, **dadurch gekennzeichnet, dass** die radialen Verstärkungselemente der Karkassenbewehrung (1) gemischte kombinierte Seile sind, die durch Zwirnen mindestens eines Drahts mit einem Elastizitätsmodul unter Zugbeanspruchung von 2.000 cN/tex und mindestens einem Draht mit einem Elastizitätsmodul unter Zugbeanspruchung von höchstens 1.500 cN/tex gebildet werden, wobei die Elastizitätsmoduln der Drähte bei einer Zugkraft von zehn Prozent (10 %) der Reißkraft des jeweiligen betrachteten Drahts gemessen werden.

3. Luftreifen für Flugzeuge nach einem der Ansprüche 1 oder 2, **dadurch gekennzeichnet, dass** einige Verstärkungselemente an der umlaufenden Verstärkungsbewehrung (3) von innen nach außen verankert sind und andere Verstärkungselemente an der gleichen umlaufenden Verstärkungsbewehrung (3) von außen nach innen verankert sind.

4. Luftreifen für Flugzeuge, der auf einen hohen Druck aufgepumpt ist, mit einem Laufstreifen (7), einer Scheitelbewehrung (6) und einer radialen Karkassenbewehrung (1), der umfasst:
- mindestens zwei axial innere Lagen (1A und 1B), die aus textilen, in radialer Richtung orientierten Verstärkungselementen (Winkel der Verstärkungen mit der Umfangsrichtung 80° bis 100°) gebildet sind, wobei die beiden Lagen in jedem Wulst (2) zur Bildung von Hochschlägen (10A und 10B) von innen nach außen um mindestens einen Wulstkern (3) umgeschlagen sind, und
- mindestens eine axial äußere Lage (1C, 1D) von textilen, radial ausgerichteten Verstärkungselementen, die unter der Scheitelbewehrung (6) in radialer Richtung über den inneren Lagen (1A und 1B) liegen und sich in den Wülsten (2) entlang der Hochschläge (10A und 10B) der inneren Lagen erstrecken,
**dadurch gekennzeichnet, dass** die radialen Verstärkungselemente aller Lagen (1A, 1B, 1C, 1D, ...) der Karkassenbewehrung (1) gemischte kombinierte Seile sind, die durch Zwirnen mindestens eines Drahts mit einem Elastizitätsmodul unter Zugbeanspruchung von mindestens 2.000 cN/tex mit mindestens einem überdrehten oder nicht überdrehten Draht mit einem Elastizitätsmodul unter Zugbeanspruchung von höchstens 1.500 cN/tex gebildet sind, wobei die Elastizitätsmoduln der Drähte bei einer Zugkraft gemessen werden, die dem 0,1-Fachen der Reißkraft des jeweiligen Drahts entspricht.

5. Luftreifen nach Anspruch 4, **dadurch gekennzeichnet, dass** die Kurve, die die Zugkraft in Abhängigkeit von der relativen Dehnung für jedes Verstärkungselement der Karkasse darstellt, eine Steigung am Ursprung (Deformation Null) und eine Steigung beim Bruch (Deformation εR) aufweist, wobei das Verhältnis der Steigung der Tangente an die Kurve am Punkt der relativen Dehnung Null ε0 und der Steigung der Tangente an die gleiche Kurve am Punkt der Dehnung εR beim Bruch im Bereich von 0,08 bis 1,0 liegt.

6. Luftreifen nach Anspruch 5, **dadurch gekennzeichnet, dass** die relative Dehnung εT am Übergangspunkt T, der als Schnittpunkt der Kurve, die die Zugkraft in Abhängigkeit von der Dehnung ε darstellt, und einer Geraden definiert ist, die parallel zur Ordinate der Kurve verläuft und durch den Schnittpunkt der Tangenten an die Kurve in den Punkten, die der relativen Dehnung Null ε0 und der relativen Reißdehnung εR entsprechen, hindurchgeht, im Bereich von 1 bis 7 % liegt.

7. Luftreifen nach Anspruch 6, **dadurch gekennzeichnet, dass** die Reißkraft eines Verstärkungselements größer als 70 cN/tex ist.

8. Luftreifen nach Anspruch 7, **dadurch gekennzeichnet, dass** der Draht mit hohem Modul ein Draht aus Filamenten aus einem aromatischen Polyamid ist, und **dadurch**, dass der Draht mit niedrigem Modul ein Draht aus Filamenten aus einem aliphatischen Polyamid ist.

9. Luftreifen nach einem der Ansprüche 4 bis 8, **dadurch gekennzeichnet, dass** die Kalandrierkautschukmischung(en) der axial inneren Karkassenlagen (1A, 1B), die zur Bildung der Hochschläge (10A, 10B) um den Wulstkern zur Verankerung (3) umgeschlagen sind, Sekantenmoduln aufweisen, die kleiner sind als der oder die Sekantenmodul(n) der Kalandriermischungen der axial äußeren Lage(n) (1C, 1D).

10. Luftreifen nach Anspruch 9, **dadurch gekennzeichnet, dass** der Modul der einzigen Kalandriermischung der axial inneren Lagen (1A, 1B) im Bereich von 4,5 bis 6,0 MPa und der Modul der einzigen Mischung der axial äußeren Lagen (1C, 1D) im Bereich von 10,0 bis 14,0 MPa liegt.

11. Luftreifen nach einem der Ansprüche 4 bis 10, **dadurch gekennzeichnet, dass** die Scheitelbewehrung (6) mindestens eine Funktionsbewehrung (6T) umfasst, die durch zickzackförmiges Aufwickeln eines Streifens mindestens eines Verstärkungselements bis zur Bildung von mindestens zwei Lagen von gekreuzten Elementen, die mit der Umfangsrichtung einen Winkel von 8° bis 30° bilden, um eine mehr oder weniger zylindrische Form von einem Rand der Bewehrung zum anderen gebildet wird, wobei es sich bei dem Verstärkungselement um ein gemischtes kombiniertes Seil gleicher Art und gleicher Struktur handelt wie die Seile, die die Karkassenbewehrung (1) bilden.

12. Luftreifen nach Anspruch 11, **dadurch gekennzeichnet, dass** die Funktionsscheitelbewehrung (6T) in radialer Richtung zwischen der Karkassenbewehrung und den durch zickzackförmiges Aufwickeln erhaltenen Lagen mindestens eine Lage aufweist, die aus umlaufenden Elementen der gleichen Art und der gleichen Struktur, wie die Seile, die die Karkassenbewehrung (1) bilden, gebildet wird.

13. Luftreifen nach Anspruch 11, **dadurch gekennzeichnet, dass** der Sekantenmodul der Kalandriermischung der Funktionsscheitelbewehrungslagen (6T) einen Wert zwischen den entsprechenden Werten der Sekantenmoduln der Kalandiermischungen der axial äußeren Karkassenlagen (1C, 1D) und axial inneren Karkassenlagen (1A, 1B) aufweist, wobei der Modul im Bereich von 7,5 bis 9,5 MPa liegt.

14. Luftreifen nach einem der Ansprüche 11 bis 13, **dadurch gekennzeichnet, dass** die Scheitelbewehrung (6) radial über der Funktionsbewehrung (6T) eine Schutzbewehrung (6P) aufweist, die aus mindestens einer Lage von Verstärkungselementen aus einem aromatischen Polyamid besteht, die mit der Umfangsrichtung einen Winkel von 45° bis 70° bilden.

15. Luftreifen nach Anspruch 1, **dadurch gekennzeichnet, dass** die Seile der Funktionsscheitelbewehrung gemischte kombinierte Seile sind, deren Kurve, die die Zugkraft in Abhängigkeit von der relativen Dehnung darstellt, sich im Wesentlichen aus zwei Bereichen auf beiden Seiten eines Übergangspunkts (T) zusammensetzt, wobei der Punkt (T) einer relativen Dehnung von 1 bis 7 % entspricht und das Verhältnis der Steigung der Tangente am Punkt der relativen Dehnung Null und der Steigung der Tangente an die Kraftdehnungskurve beim Bruch im Bereich von 0,08 bis 1,0 liegt, und **dadurch**, das die Reißkraft eines Elements der Karkassenbewehrung über 70 cN/tex liegt.

16. Luftreifen nach Anspruch 15, **dadurch gekennzeichnet, dass** die Karkasse aus Verstärkungselementen gebildet wird, die mit den Elemente der Funktionsscheitelbewehrung identisch sind.

17. Luftreifen nach einem der Ansprüche 1 bis 16, **dadurch gekennzeichnet, dass** der Laufstreifen ein Profil aufweist, das eine zentrale Rippe besitzt, in axialer Richtung über umlaufende Rillen von weiteren Rippen getrennt wird, wobei die zentrale Rippe in Umfangsrichtung kontinuierlich ist, wohingegen die anderen Rippen durch allgemein in Querrichtung orientierte Rillen in Blöcke unterteilt sind.
